# EUROPEAN PATENT SPECIFICATION

(11) **EP 2 703 282 B1**
(45) Date of publication and mention of the grant of the patent: **15.11.2017**
(21) Application number: 12182650.7
(22) Date of filing: 31.08.2012
(51) Int. Cl.: B64C 1/14, B64D 13/02

(54) **System and method for equalizing an overpressure in the interior of an aircraft cabin**
System und Verfahren zum Ausgleichen eines Überdrucks im Inneren einer Flugzeugkabine
Système et procédé permettant d'égaliser une surpression à l'intérieur d'une cabine d'aéronef

(43) Date of publication of application: 05.03.2014
(73) Proprietor: Airbus Operations GmbH, 21129 Hamburg (DE)
(72) Inventor: Waigl, Ilja, 30926 Seelze (DE)
(74) Representative: Bird & Bird LLP

(56) References cited:
- EP-A1- 2 234 874
- US-A- 2 960 923
- US-A- 5 337 977

## Description

The present invention relates to a system for equalizing an overpressure in the interior of an aircraft cabin with respect to the exterior of the aircraft and to a corresponding method.

In most aircrafts, and in particular in passenger aircrafts, the interior of the fuselage in general and the cabin in particular is pressurized during flight to maintain the pressure in the cabin equal to a pressure corresponding to a low altitude at which the human body is unlikely to notice a deviation from sea level pressure, even if the aircraft is traveling at a cruise altitude of, e.g., 10000 meters.

For this purpose, the aircraft is typically provided with a means for continuously pumping air from the exterior of the aircraft into the fuselage and the cabin, and with one or more so-called outflow valves for continuously venting air from the interior of the fuselage and cabin. The ratio of the flow of air into the cabin and the flow of air out of the cabin is adjusted either manually or automatically to thereby obtain and maintain the desired pressure inside the cabin.

In the case of aircrafts having gas turbine engines, the means for pumping air into the cabin usually comprises a bleed air supply system which is adapted for taking air from the engines after it has been compressed by the engines but before it is mixed with fuel, and for delivering this air to the cabin. The outflow valves are typically structurally reinforced ports or openings in the aircraft fuselage which can be selectively opened and closed by means of a valve flap.

If an automatic control of the outflow valves is provided, this is effected by means of a cabin pressure control system which operates the one or more outflow valves and usually also controls the inflow of air into the cabin. Even in case of such automated systems, there is usually the possibility of manually controlling the outflow valves in cases of malfunctions of the automatic control.

The desired cabin pressure is set by the cabin pressure control system. Before take-off, the pilot enters the cruise altitude into the cabin pressure control system, which after take-off gradually modifies the cabin pressure in such a manner that abrupt changes are avoided during ascending and that the desired cabin pressure set by the cabin pressure control system is achieved when reaching cruise altitude. For this purpose, the outflow valves, which are fully open on the ground, are gradually closed while the aircraft is climbing.

Prior to the aircraft starting descending for landing, the altitude of the destination airport is entered into the cabin pressure control system, and during descent the outflow valves are gradually opened in such a manner that the cabin pressure matches the ground pressure at the destination airport upon touchdown. Thus, if working and operated correctly the cabin pressure control system also serves to prevent the occurrence of a residual cabin pressure after landing at the time the doors or other closing devices for apertures in the fuselage of the aircraft are to be opened. This is very important, because in the case of an overpressure condition of the aircraft cabin with respect to the ambient pressure the door or closing device may open explosively, thereby risking that the person operating the door or closing device or other persons are hurt and that the aircraft or surrounding equipment is damaged.

In order to prevent such accidents passenger aircrafts may be provided with means for measuring the cabin pressure and for indicating or displaying the cabin pressure or for warning in case of the occurrence of a potentially dangerous residual cabin pressure. Such indicating or warning systems may, in particular, be integrated into the doors or closing devices and may be provided with an autonomous energy device and controller to ensure that they are operable even in case the aircraft has been powered down following reaching the parking position and the on-board power network is therefore switched off partially or completely. The warning may take the form of an acoustic and/or optical alarm provided on or near the door or closing device.

For example, EP 1 534 588 discloses an aircraft door having an opening mechanism and a device for warning that an overpressure condition exists when trying to open the door with the opening mechanism, if necessary. The device includes an air flow channel providing fluid communication between the interior and the exterior of the aircraft and a valve which normally blocks airflow through the channel. The valve is coupled with a control lever which is, in turn, coupled with the opening mechanism in such a manner that the valve is opened and allows for air flow through the channel upon operating the opening mechanism. Further, the valve is constructed such that an acoustic signal is then generated by the existence of an overpressure condition and the resulting air flow through the valve.

If a warning is received or an overpressure condition is indicated, the aircraft crew may simply wait or manually (further) open the outflow valves or a specifically provided valve to allow for rapid depressurization.

While these systems usually provide for a safe operation of aircraft doors and closing devices, there is still the risk that the warnings or indications are overlooked or disregarded or that a warning system of the mentioned type is not sufficient, and it would be preferable to safely prevent the occurrence of overpressure conditions, i.e. residual cabin pressures, from the very beginning. This is also important from a safety perspective because in the case of an emergency evacuation of the aircraft, which requires all passengers to leave the aircraft within a period of 90 seconds, a warning would considerably delay evacuation.

It is to be noted that residual cabin pressures may occur even if the cabin pressure control system is in principle operating correctly.

As mentioned above, the control system typically relies on the pilot entering the correct altitude of the destination airport, so that the cabin pressure control system is able to appropriately control the outflow valves such that the cabin pressure matches the ambient pressure at the destination airport upon touchdown. Thus, entry of an incorrect altitude may result in a residual cabin pressure.

Further, the cabin pressure control system typically comprises a manual override mechanism. While this mechanism is advantageous for being able to deactivate the automatic operation of an incorrectly operating system or of a system which is not adapted to particular conditions, inappropriate operation can also result in a residual cabin pressure.

Moreover, it is common practice for the crew or ground personnel to manually close the outflow valves while the aircraft is located on the ground, e.g. for preventing entry of animals or dirt through the outflow valves into the fuselage and cabin. In that case the outflow valves no longer function to prevent the buildup of internal pressure on the ground, e.g. due to heating caused by sunlight exposure. In the latter case residual cabin pressure indicators or warning devices are not sufficient, because they usually rely on the supply of electrical energy for their operation, which is not available at all times while the aircraft is powered down.

Several systems exist for preventing specific abnormal pressure conditions which may pose a risk. For example, DE 678 457 discloses a system for allowing entry of exterior air into the aircraft cabin in case of an abnormally rapid descent resulting in the exterior pressure being higher than the cabin pressure and corresponding abnormal forces on the fuselage. This system comprises a flow channel and a valve normally closing the flow channel. The valve is operatively coupled with an actuating member which is subjected to the exterior and interior pressures and is adapted for opening the valve in case the exterior pressure exceeds the interior cabin pressure in order to allow entry of air into the cabin.

However, this system and other systems are not operable for preventing the occurrence of a potentially dangerous residual cabin pressure as discussed above.

US 2,960,923 discloses a pressure equalization system by means of which cabin pressures may be equalized with atmospheric pressures on aircraft grounding, i.e. after landing, and such pressure equalization may be maintained subsequently. Further, establishing of an overpressure condition prior to take-off can be prevented, when the compressor is already running. The system comprises valves which are automatically opened upon landing and are closed during flight. In the opened state of the valves the cabin interior is in fluid communication with the aircraft exterior, and in the closed state the valves seal the aircraft interior from the aircraft exterior.

It is thus an object of the present invention to provide a system which is operable to safely prevent the occurrence of a residual cabin pressure and which is constructed in a simple manner and easy to operate.

This object is achieved by an aircraft door comprising a system for equalizing an overpressure in the interior of an aircraft cabin with respect to the exterior of the aircraft comprising the features of claim 1 and by a method for equalizing an overpressure in the interior of an aircraft cabin with respect to the exterior of the aircraft comprising the features of claim 11. Advantageous embodiments of the system are the subject-matter of the respective dependent claims.

The system is adapted for equalizing an overpressure in the interior of an aircraft cabin with respect to the exterior of the aircraft. It comprises a fluid flow path arranged and adapted for providing fluid communication between the interior of an aircraft cabin and the exterior of the aircraft. The fluid flow path may take different forms and can, in particular, be provided by a straight, curved or tortuous conduit, channel, pipe or tube extending between the interior of the fuselage or the cabin and the exterior of the aircraft.

Further, the system comprises a check valve, i.e. a non-return or one-way valve, e.g. in the form of a pneumatic check valve. The check valve has an opened state and a closed state and is arranged and adapted to enable fluid flow through the fluid flow path from the interior of the aircraft cabin to the exterior of the aircraft and to block fluid flow through the fluid flow path in the reverse direction when the check valve is in the opened state, and to block any fluid flow through the fluid flow path in either direction between the interior of the aircraft cabin and the exterior of the aircraft in both flow directions when the check valve is in the closed state.

The system also comprises a control means, e.g. a control unit or control device, which is operatively coupled to the check valve and adapted for controlling the check valve to selectively operate in the opened state and the closed state. The control means is constructed and arranged to provide for automatic control of the check valve, e.g. based on certain criteria.

The above-described system provides the advantage that the check valve can be or is opened in situations in which an undesired and potentially dangerous residual cabin pressure may occur. When the check valve is open, air can exit the interior of the fuselage or cabin, thereby allowing relieving residual cabin pressure. Nevertheless, in case of a water emergency landing, a so-called ditching scenario, water cannot enter the aircraft even if the check valve is opened and functional to relieve residual cabin pressure. Moreover, also in cases in which an aircraft is parked on the ground and powered down and in which residual cabin pressure warning systems are either not operational at all or include an own energy source capable of providing the warning for a limited period of time only, and in which the outflow valves have been manually closed or malfunction, the generation of potentially dangerous residual cabin pressures, e.g. due to heating caused by sunlight exposure, is safely prevented without opening a path for the entry of animals and dirt.

Further, while providing this advantageous functionality, the check valve can be or is closed during normal flight when an overpressure of the cabin with respect to the exterior of the aircraft is intended and desired, so that the operation of the normal cabin pressure control system is not affected.

The control means is an electrical control means adapted for electrically controlling the check valve to selectively operate in its opened state or in its closed state, in particular by providing a corresponding electrical or wireless control signal to the check valve. It is preferred that the check valve is adapted to change to the closed state and to remain in the closed state when - and preferably and as long as - it receives the control or activation signal, and to change to the opened state and to remain in the opened state when - and preferably and as long as - it does not receive the control or activation signal. The control signal is preferably predetermined and may be an electrical control signal. However, it is also possible for the control signal to be or involve a wireless signal. The system comprises a sensor operatively coupled to the control means and adapted for detecting touchdown of the aircraft, stopping of the aircraft, descending of the aircraft below a predetermined height and/or the exterior pressure of the aircraft exceeding a predetermined pressure and for generating a corresponding first detection signal. The control means is adapted for controlling the check valve to operate in its opened state upon receiving the first detection signal. Thus, advantageously, the check valve is automatically switched into the state effective to relieve or prevent residual cabin pressure when the aircraft is in a situation or approaches a situation in which an overpressure condition of the cabin is undesired and potentially dangerous. In a preferred embodiment the system comprises a sensor operatively coupled to the control means and adapted for detecting starting of the engines of the aircraft and for generating a corresponding second detection signal. The control means is adapted for controlling the check valve to operate in its closed state upon receiving the second detection signal. Thus, advantageously, the check valve is automatically switched into the state not affecting the normal operation of the cabin pressure control system when the aircraft is in a situation or approaches a situation in which an overpressure condition of the cabin is desired and intended.

In a further preferred embodiment the system comprises an electrical power source coupled to the check valve and arranged and adapted for supplying electrical energy to the check valve. The check valve is constructed such that it requires electrical power to operate or remain in its closed state and such that it operates and remains in its opened state when it does not receive electrical power or does not receive sufficient electrical power from the electrical power source. In other words, the check valve is normally open. In particular, the electrical power source may be a part of the normal electrical power supply system of the aircraft. In this manner, it is ensured that the check valve is effective to relieve and prevent a residual cabin pressure when the aircraft is parked and powered down. When this embodiment is chosen, it is advantageously possible for the control means to effect the control of the check valve by selectively interrupting and allowing the supply of electrical energy from the power source to the check valve or by selectively switching off and on the power source. For this purpose, a control signal, and in particular an electrical control signal, as mentioned above may be provided to the power source or to a switch disposed between the power source and the check valve. The control means and in particular an electrical control means may be adapted for providing such a control signal to the power source or switch instead of to the check valve, or both to the power source or switch and to the check valve.

In a preferred embodiment the control means and the check valve are adapted and operatively coupled to each other such that in operation the check valve transmits status and/or error data to the control means and the control means receives and processes the status and/or error data. Thus, the control means is adapted for monitoring the check valve and to receive feedback of the valve status from the check valve. In particular, it is preferred if the control means is adapted to automatically analyze the received status and/or error data and to identify and indicate error conditions, e.g. by sounding an acoustic and/or optical alarm. In this manner, malfunction of the check valve and dormant errors can be recognized.

The air flow channel is arranged in a door of an aircraft or a door frame surrounding a door of an aircraft or form part of these components. The arrangement in or as part of a door or door frame is advantageous because a residual cabin pressure is dangerous at these locations. However, it is possible to arrange the air flow channel anywhere through the fuselage, i.e. also remote from doors and door frames, and to take into consideration other criteria, such as available space, which may be limited in door and door frames. In case the aircraft door comprises an electrical door monitoring system, it is further preferred if the control means is a part of the electrical door monitoring system, in particular if a control means of the electrical door monitoring system also constitutes the control means of the system of the present invention. Such a construction saves costs and weight.

As noted above, the system according to the present invention is an integral part of an aircraft door, and such an aircraft door may be an integral part of an aircraft.

If an aircraft is equipped with a door as described above, a residual cabin pressure can be advantageously prevented or relieved by means of a method which comprises continuously or intermittently determining whether the aircraft has landed or is about to land and whether the aircraft has taken off or is about to take off, and switching the check valve into the opened and closed state, respectively, in accordance with such a determination.

For example, it is determined automatically by means of suitable sensors whether a predetermined landing indication event has occurred, i.e. an event which indicates that the aircraft has landed or is about to land. Events suitable as landing indication events are, for example, touchdown of the aircraft, stopping of the aircraft, descending of the aircraft below a predetermined height and increase of the exterior pressure of the aircraft above a predetermined pressure, which may also be adjustable by the aircraft crew to take into account different altitudes of the destination airport. Upon determining that the or a predetermined landing indication event has occurred, the control means is operated to control the check valve to operate in its opened state. The control means automatically operates accordingly in response to the occurrence of the respective landing indication event.

Similarly, it is determined, either automatically by means of suitable sensors or by the aircraft crew, whether a predetermined starting indication event has occurred, i.e. an event which indicates that the aircraft has taken off or is about to take off. Events suitable as starting indication events are, for example, starting of the engines of the aircraft, takeoff and decrease of the exterior pressure of the aircraft below a predetermined pressure, which may also be adjustable by the aircraft crew to take into account different altitudes of the departure airport. Upon determining that the or a predetermined starting indication event has occurred, the control means is operated to control the check valve to operate in its closed state. The operation of the control means may be effected manually, but it is preferred if the control means automatically operates accordingly in response to the occurrence of the respective starting indication event.

In the following, an embodiment of the invention is explained in detail with reference to the enclosed Figures.
Figure 1 shows an aircraft door comprising a system for equalizing an overpressure in the interior of an aircraft cabin with respect to the exterior of the aircraft in accordance with an embodiment of the invention.
Figure 2 shows a flow chart of a method in accordance with an embodiment of the invention.

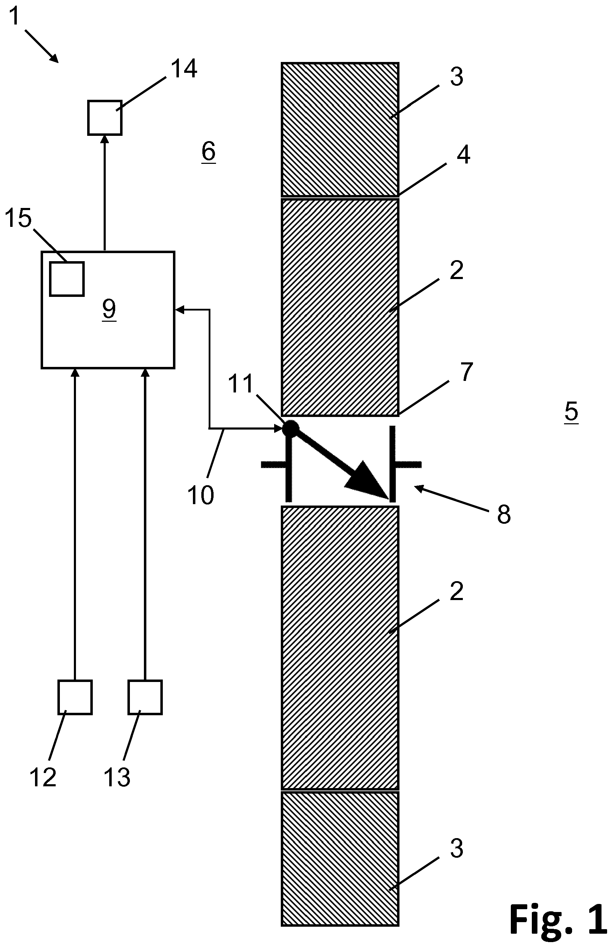

The system 1 shown in Figure 1 is integrated into the door 2 of an aircraft.

The door 2 is surrounded by a door frame 3 and is operable to open and close an aperture 4 in the fuselage of the aircraft. The door 2 separates the exterior 5 of the aircraft and the interior cabin 6 of the aircraft from each other. For opening the door 2 a hinge (not shown) is provided which enables the door 2 being pivoted outwardly. In case a residual cabin pressure exists in the interior 6 of the cabin which is higher than the pressure in the exterior 5 of the aircraft at the time of opening the door 2, the door 2 is violently forced outwardly by the corresponding pressure difference existing over the door 2.

For safely preventing that such dangerous residual cabin pressures occur, an air flow channel 7 in the form of a straight bore is provided through the door 2 such that its two ends open into the interior 6 of the cabin and the exterior 7 of the aircraft, respectively. Inside the channel 7 a check valve 8 is disposed, which can be switched between an opened and a closed state. It is arranged in such a manner that when operating in its opened state it prevents fluid flow from the exterior 5 through the channel 7 into the cabin 6, but allows fluid flow in the reverse direction, i.e. from the cabin 6 through the channel 7 to the exterior 5. In the closed state of the valve 8 fluid flow in both directions is prevented.

For controlling the state of the valve 8 an electrical control unit 9 is provided inside the aircraft, which control unit 9 is electrically coupled to the check valve 8 via electrical leads 10. The control unit 9 is adapted for generating a suitable control signal or suitable control signals which are supplied to an electrical interface 11 of the valve 8, and the valve 8 is adapted for interpreting the received control signals to selectively change between the opened and closed states in accordance with the received control signals. The leads 10 also comprise leads for supplying electrical energy from the control unit 9 to the check valve 8. The electrical energy may be taken from an electrical power supply 15 integrated into the control unit 9 or may be derived by the control unit 9 from the on-board power supply of the aircraft (not shown).

In a preferred embodiment the check valve 8 is constructed in such a manner that it operates in its closed state if and only if it receives sufficient, i.e. at least a predetermined amount of, electrical power via its interface 11, and to assume and operate in its opened state otherwise. Thereby, it is ensured that when the aircraft is parked and powered down the check valve 8 is maintained in the opened state and is effective to relieve any residual cabin pressure from building up. In this embodiment, the control signal generated by the control unit 9 may actually be an energy signal sufficient for maintaining the valve 8 in its closed state, and changing the valve 8 into its opened state merely requires that the control unit 9 removes the energy signal from the leads 10.

The system further comprises a landing detector 12 and a starting or starting detector 13, which are operable to detect that the aircraft has landed and that the aircraft engines have been started, respectively, and to provide corresponding detection signals to the control unit 9.

The control unit is adapted to control the check valve 8 to operate in its opened state upon receiving a landing detection signal from the landing detector 12 and to operate in its closed state upon receiving a starting detection signal from the starting detector 13. Thus, it is ensured that during flight the channel 7 is closed to prevent negative influences on the operation of the normal cabin pressure control system, and that fluid flow out of the cabin through the channel 7 is possible as soon as residual cabin pressures are undesired and may pose a problem.

Further, the interface 11 of the check valve 8 is adapted for generating signals indicating the status of the valve 8 (opened or closed) and error conditions of the valve 8 and to supply these signals via the leads 10 to the control unit 9, and the control unit 9 is adapted for processing and analyzing these signals to determine possible errors which affect or may affect the correct operation of the valve 8. In case such errors are determined, an optical or acoustic indicator 14 is operated by the control unit 9.

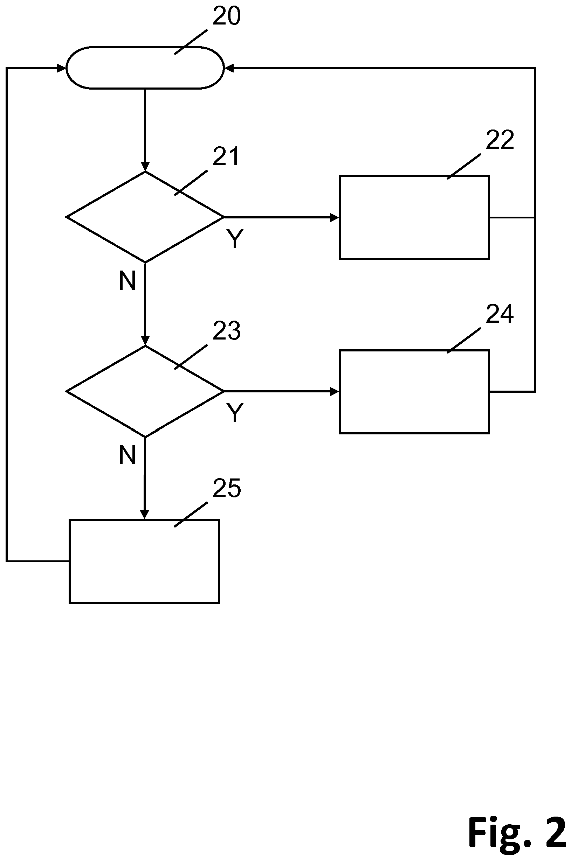

Figure 2 shows an example of the operation of the system 1. The method starts at step 20. Then, it is determined whether the landing detector 12 has provided a detection signal indicative of landing (step 21). If that is the case, the check valve 9 is controlled to remain or change into the opened state (step 22), and the method reverts to step 20. Otherwise, it is determined whether the starting detector 13 has provided a detection signal indicative of starting (step 23). If that is the case, the check valve 9 is controlled to remain or change into the closed state (step 24), and the method reverts to step 20. If no detection signals are provided by the detectors 12 and 13, the check valve 8 is maintained in its current state (step 25), and the method reverts to step 20. It is in principle also possible that the check valve 8 is operated manually, either directly or via the control unit 9.

## Claims

1. An aircraft door comprising a system for equalizing an overpressure in the interior (6) of an aircraft cabin with respect to the exterior (5) of the aircraft, the system comprising:
a fluid flow path (7) adapted for providing fluid communication between the interior (6) of an aircraft cabin and the exterior (5) of the aircraft,
a check valve (8) having an opened state and a closed state and arranged and adapted to
- enable fluid flow through the fluid flow path (7) from the interior (6) of the aircraft cabin to the exterior (5) of the aircraft and to block fluid flow through the fluid flow path (7) in the reverse direction when the check valve (8) is in the opened state, and
- block fluid flow through the fluid flow path (7) in both flow directions when the check valve (8) is in the closed state,
a control means (9) operatively coupled to the check valve (8) and adapted for controlling the check valve (8) to switch between the opened state and the closed state, wherein the control means (9) is an electrical control means adapted for electrically controlling the check valve (8) to selectively operate in its opened state or in its closed state, and
a sensor (12) operatively coupled to the control means (9) and adapted for detecting touchdown of the aircraft, stopping of the aircraft, descending of the aircraft below a predetermined height and/or the exterior pressure of the aircraft exceeding a predetermined pressure and for generating a corresponding first detection signal, and wherein the control means (9) is adapted for controlling the check valve (8) to operate in its opened state upon receiving the first detection signal.

2. The aircraft door according to claim 1, wherein the electrical control means (9) is adapted for providing a control signal to the check valve (8), and the check valve (8) is adapted to
- change to the closed state and to remain in the closed state when it receives the control signal, and
- change to the opened state and to remain in the opened state when it does not receive the control signal.

3. The aircraft door according to any of the preceding claims, further comprises a sensor (13) operatively coupled to the control means (9) and adapted for detecting starting of the engines of the aircraft and for generating a corresponding second detection signal, and wherein the control means (9) is adapted for controlling the check valve (8) to operate in its closed state upon receiving the second detection signal.

4. The aircraft door according to any of the preceding claims, further comprising an electrical power source (15) coupled to the check valve (8) and adapted for supplying electrical energy to the check valve (8), wherein the check valve (8) is constructed such that it requires electrical power to operate in its closed state and such that it operates in its opened state when it does not receive electrical power from the electrical power source (15).

5. The aircraft door according to any of the preceding claims, wherein the control means (9) and the check valve (8) are adapted and operatively coupled such that in operation the check valve (8) transmits status and/or error data to the control means (9) and the control means (9) receives and processes the status and/or error data.

6. The aircraft door according to claim 5, wherein the control means (9) is adapted to automatically analyze the received status and/or error data and to identify and indicate error conditions.

7. The aircraft door according to any of the preceding claims, wherein the air flow channel (7) is arranged in the door (2) or a door frame (3) surrounding the door (2).

8. The aircraft door according to claim 7, wherein the aircraft door (2) comprises an electrical door monitoring system, and the control means (9) is a part of the electrical door monitoring system.

9. An aircraft comprising an aircraft door according to any of the preceding claims.

10. The aircraft according to claim 9 comprising a door according to claim 4, wherein the electrical power source is part of the electrical power supply of the aircraft.

11. A method for equalizing an overpressure in the interior (6) of an aircraft cabin of an aircraft according to claim 9 or 10 with respect to the exterior (5) of the aircraft, wherein the method comprises the following steps:
- determining (21) whether a predetermined landing indication event has occurred which is indicative of the fact that the aircraft has landed or is about to land, and operating (22) the control means (9) to control the check valve (8) to operate in its opened state if the occurrence of the landing indication event has been determined, and
- determining (23) whether a predetermined starting indication event has occurred which is indicative of the fact that the aircraft has taken off or is about to take off, and operating (24) the control means (9) to control the check valve (8) to operate in its closed state if the occurrence of the starting indication event has been determined.

## Patentansprüche

1. Flugzeugtür, die ein System zum Ausgleichen eines Überdrucks in dem Inneren (6) einer Flugzeugkabine in Bezug auf das Äußere (5) des Flugzeugs aufweist, wobei das System aufweist:
einen Fluidströmungsweg (7), der zum Bereitstellen einer Fluidverbindung zwischen dem Inneren (6) einer Flugzeugkabine und dem Äußeren (5) des Flugzeugs angepasst ist,
ein Rückschlagventil (8), das einen geöffneten Zustand und einen geschlossenen Zustand aufweist und das angeordnet und angepasst ist, um
- eine Fluidströmung durch den Fluidströmungsweg (7) von dem Inneren (6) der Flugzeugkabine zu dem Äußeren (5) des Flugzeugs zu ermöglichen und um eine Fluidströmung durch den Fluidströmungsweg (7) in der umgekehrten Richtung zu blockieren, wenn das Rückschlagventil (8) in dem geöffneten Zustand ist, und
- eine Fluidströmung durch den Fluidströmungsweg (7) in beiden Strömungsrichtungen zu blockieren, wenn das Rückschlagventil (8) in dem geschlossenen Zustand ist,
eine Steuereinrichtung (9), die betriebsmäßig mit dem Rückschlagventil (8) gekoppelt ist und zum Steuern des Rückschlagventils (8) angepasst ist, um zwischen dem geöffneten Zustand und dem geschlossenen Zustand umzuschalten, wobei die Steuereinrichtung (9) eine elektrische Steuereinrichtung ist, die zum elektrischen Steuern des Rückschlagventils (8) in der Weise angepasst ist, dass es selektiv in seinem geöffneten Zustand oder in seinem geschlossenen Zustand arbeitet, und
einen Sensor (12), der betriebsmäßig mit der Steuereinrichtung (9) gekoppelt ist und zum Erkennen eines Aufsetzens des Flugzeugs, eines Anhaltens des Flugzeugs, eines Sinkens des Flugzeugs unter eine vorbestimmte Höhe und/oder des Außendrucks des Flugzeugs, der einen vorbestimmten Druck überschreitet, und zum Erzeugen eines entsprechenden ersten Detektionssignals angepasst ist, und wobei die Steuereinrichtung (9) zum Steuern des Rückschlagventils (8) in der Weise angepasst ist, dass es auf das Empfangen des ersten Detektionssignals hin in seinem geöffneten Zustand arbeitet.

2. Flugzeugtür gemäß Anspruch 1, bei der die elektrische Steuereinrichtung (9) zum Bereitstellen eines Steuersignals an das Rückschlagventil (8) angepasst ist und das Rückschlagventil (8) angepasst ist, um
- zu dem geschlossenen Zustand zu wechseln und in dem geschlossenen Zustand zu bleiben, wenn es das Steuersignal empfängt, und
- zu dem geöffneten Zustand zu wechseln und in dem geöffneten Zustand zu bleiben, wenn es das Steuersignal nicht empfängt.

3. Flugzeugtür nach einem der vorhergehenden Ansprüche, die des Weiteren einen Sensor (13) aufweist, der betriebsmäßig mit der Steuereinrichtung (9) gekoppelt ist und zum Detektieren des Startens der Triebwerke des Flugzeugs und zum Erzeugen eines entsprechenden zweiten Detektionssignals angepasst ist, und wobei die Steuereinrichtung (9) zum Steuern des Rückschlagventils (8) in der Weise angepasst ist, dass es auf das Empfangen des zweiten Erkennungssignals hin in seinem geschlossenen Zustand arbeitet.

4. Flugzeugtür nach einem der vorhergehenden Ansprüche, die des Weiteren eine elektrische Energiequelle (15) aufweist, die mit dem Rückschlagventil (8) gekoppelt ist und zum Versorgen des Rückschlagventils (8) mit elektrischer Energie angepasst ist, wobei das Rückschlagventil (8) in der Weise konstruiert ist, dass es elektrische Energie erfordert, um in seinem geschlossenen Zustand zu arbeiten, und in der Weise, dass es in seinem geöffneten Zustand arbeitet, wenn es keine elektrische Energie von der elektrischen Energiequelle (15) empfängt.

5. Flugzeugtür nach einem der vorhergehenden Ansprüche, bei der die Steuereinrichtung (9) und das Rückschlagventil (8) in der Weise angepasst und betriebsmäßig gekoppelt sind, dass im Betrieb das Rückschlagventil (8) Status- und/oder Fehlerdaten an die Steuereinrichtung (9) überträgt und die Steuereinrichtung (9) die Status- und/oder Fehlerdaten empfängt und verarbeitet.

6. Flugzeugtür gemäß Anspruch 5, bei der die Steuereinrichtung (9) angepasst ist, um die empfangenen Status- und/oder Fehlerdaten automatisch zu analysieren und um Fehlerbedingungen zu identifizieren und anzuzeigen.

7. Flugzeugtür nach einem der vorhergehenden Ansprüche, bei der der Luftströmungskanal (7) in der Tür (2) oder in einem Türrahmen (3) angeordnet ist, der die Tür (2) umgibt.

8. Flugzeugtür nach Anspruch 7, bei der die Flugzeugtür (2) ein elektrisches Türüberwachungssystem umfasst und die Steuereinrichtung (9) ein Teil des elektrischen Türüberwachungssystems ist.

9. Flugzeug, das eine Flugzeugtür nach einem der vorhergehenden Ansprüche aufweist.

10. Flugzeug nach Anspruch 9, das eine Tür nach Anspruch 4 aufweist, wobei die elektrische Energiequelle Teil der elektrischen Energieversorgung des Flugzeugs ist.

11. Verfahren zum Ausgleichen eines Überdrucks in dem Inneren (6) einer Flugzeugkabine eines Flugzeugs nach Anspruch 9 oder 10 in Bezug auf das Äußere (5) des Flugzeugs, wobei das Verfahren die folgenden Schritte aufweist:
- Ermitteln (21), ob ein vorbestimmtes Landungsanzeichenereignis aufgetreten ist, welches indikativ für die Tatsache ist, dass das Flugzeug gelandet ist oder dabei ist, zu landen, und Betätigen (22) der Steuereinrichtung (9), um das Rückschlagventil (8) so zu steuern, dass es in seinem geöffneten Zustand arbeitet, wenn das Auftreten des Landungsanzeichenereignisses ermittelt worden ist, und
- Ermitteln (23), ob ein vorbestimmtes Startanzeichenereignis aufgetreten ist, welches indikativ für die Tatsache ist, dass das Flugzeug abgehoben hat oder dabei ist, abzuheben, und Betätigen (24) der Steuereinrichtung (9), um das Rückschlagventil (8) so zu steuern, dass es in seinem geschlossenen Zustand arbeitet, wenn das Auftreten des Startanzeichenereignisses ermittelt worden ist.

## Revendications

1. Une porte d'aéronef comprenant un système pour égaliser une surpression à l'intérieur (6) d'une cabine d'aéronef par rapport à l'extérieur (5) de l'aéronef, le système comprenant :
un trajet d'écoulement de fluide (7) conçu pour fournir une communication fluidique entre l'intérieur (6) d'une cabine d'aéronef et l'extérieur (5) de l'aéronef,
un clapet anti-retour (8) ayant un état ouvert et un état fermé, et agencé et conçu pour
- permettre l'écoulement de fluide à travers le trajet d'écoulement de fluide (7) depuis l'intérieur (6) de la cabine d'aéronef vers l'extérieur (5) de l'aéronef et pour bloquer l'écoulement de fluide à travers le trajet d'écoulement de fluide (7) dans la direction inverse lorsque le clapet anti-retour (8) est dans l'état ouvert, et
- bloquer l'écoulement de fluide à travers le trajet d'écoulement de fluide (7) dans les deux directions d'écoulement lorsque le clapet anti-retour (8) est dans l'état fermé,
un moyen de commande (9) couplé de manière fonctionnelle au clapet anti-retour (8) et conçu pour commander le clapet anti-retour (8) pour commuter entre l'état ouvert et l'état fermé, dans lequel le moyen de commande (9) est un moyen de commande électrique conçu pour commander électriquement le clapet anti-retour (8) pour fonctionner sélectivement dans son état ouvert ou dans son état fermé, et
un capteur (12) couplé de manière fonctionnelle au moyen de commande (9) et conçu pour détecter un contact de l'aéronef, l'arrêt de l'aéronef, la descente de l'aéronef au-dessous d'une hauteur prédéterminée et/ou la pression extérieure de l'aéronef dépassant une pression prédéterminée, et pour générer un premier signal de détection correspondant, et dans lequel le moyen de commande (9) est conçu pour commander le clapet anti-retour (8) pour qu'il fonctionne dans son état ouvert lors de la réception du premier signal de détection.

2. La porte d'aéronef selon la revendication 1, dans laquelle le moyen de commande électrique (9) est conçu pour fournir un signal de commande au clapet anti-retour (8), et le clapet anti-retour (8) est conçu pour
- passer dans l'état fermé et rester dans l'état fermé lorsqu'il reçoit le signal de commande, et
- passer dans l'état ouvert et rester dans l'état ouvert lorsqu'il ne reçoit pas le signal de commande.

3. La porte d'aéronef selon l'une quelconque des revendications précédentes, comprend en outre un capteur (13) couplé de manière fonctionnelle au moyen de commande (9) et conçu pour détecter le démarrage des moteurs de l'aéronef et pour générer un second signal de détection correspondant, et dans lequel le moyen de commande (9) est conçu pour commander le clapet anti-retour (8) pour qu'il fonctionne dans son état fermé lors de la réception du second signal de détection.

4. La porte d'aéronef selon l'une quelconque des revendications précédentes, comprenant en outre une source d'alimentation électrique (15) couplé au clapet anti-retour (8) et conçue pour fournir de l'énergie électrique au clapet anti-retour (8), dans laquelle le clapet anti-retour (8) est construit de telle sorte qu'il nécessite une alimentation électrique pour fonctionner dans son état fermé et de telle sorte qu'il fonctionne dans son état ouvert lorsqu'il ne reçoit pas d'énergie électrique à partir de la source d'alimentation électrique (15).

5. La porte d'aéronef selon l'une quelconque des revendications précédentes, dans laquelle le moyen de commande (9) et le clapet anti-retour (8) sont conçus et couplés de manière fonctionnelle de telle sorte que, lors du fonctionnement, le clapet anti-retour (8) transmet des données d'état et/ou d'erreur au moyen de commande (9) et le moyen de commande (9) reçoit et traite les données d'état et/ou d'erreur.

6. La porte d'aéronef selon la revendication 5, dans laquelle le moyen de commande (9) est conçu pour analyser automatiquement les données d'état et/ou d'erreur reçues et pour identifier et indiquer des conditions d'erreur.

7. La porte d'aéronef selon l'une quelconque des revendications précédentes, dans laquelle le canal d'écoulement d'air (7) est disposé dans la porte (2) ou dans un cadre de porte (3) entourant la porte (2).

8. La porte d'aéronef selon la revendication 7, dans laquelle la porte d'aéronef (2) comprend un système de surveillance de porte électrique, et le moyen de commande (9) fait partie du système de surveillance de porte électrique.

9. Un aéronef comprenant une porte d'aéronef selon l'une quelconque des revendications précédentes.

10. L'aéronef selon la revendication 9 comprenant une porte selon la revendication 4, dans laquelle la source d'alimentation électrique fait partie de l'alimentation électrique de l'aéronef.

11. Un procédé d'égalisation d'une surpression à l'intérieur (6) d'une cabine d'aéronef d'un aéronef selon la revendication 9 ou 10, par rapport à l'extérieur (5) de l'aéronef, le procédé comprenant les étapes suivantes :
- la détermination (21) si un événement d'indication d'atterrissage prédéterminé s'est produit, qui est indicatif du fait que l'aéronef a attéri ou est sur le point d'attérir, et l'actionnement (22) du moyen de commande (9) pour commander le clapet anti-retour (8) pour qu'il fonctionne dans son état ouvert si l'apparition de l'événement d'indication d'atterrissage a été déterminée, et
- la détermination (23) si un événement d'indication de démarrage prédéterminé s'est produit, qui est indicatif du fait que l'aéronef a décolé ou est sur le point de décoler, et l'actionnement (24) du moyen de commande (9) pour commander le clapet anti-retour (8) pour qu'il fonctionne dans son état fermé si l'apparition de l'événement d'indication de départ a été déterminée.
